# EUROPÄISCHE PATENTSCHRIFT

(11) **EP 3 066 309 B1**
(45) Veröffentlichungstag und Bekanntmachung des Hinweises auf die Patenterteilung: **28.06.2017**
(21) Anmeldenummer: 15702664.2
(22) Anmeldetag: 21.01.2015
(51) Int. Cl.: F01K 3/12, F01K 25/08, F22B 1/02, F22B 1/16, F28D 20/00

(54) **VERFAHREN UND VORRICHTUNG ZUM ENTLADEN EINES THERMISCHEN SCHICHTSPEICHERS**
METHOD AND DEVICE FOR DISCHARGING A THERMAL STRATIFICATION STORAGE TANK
PROCÉDÉ ET DISPOSITIF DESTINÉS À LA DÉCHARGE D'UN ACCUMULATEUR EN COUCHES THERMIQUE

(30) Priorität: 17.02.2014 DE 102014202846
(43) Veröffentlichungstag der Anmeldung: 14.09.2016
(73) Patentinhaber: Siemens Aktiengesellschaft, 80333 München (DE)
(72) Erfinder: LENK, Uwe, 08064 Zwickau (DE); REISSNER, Florian, 90425 Nürnberg (DE); SCHÄFER, Jochen, 90408 Nürnberg (DE); TREMEL, Alexander, 91096 Möhrendorf (DE)
(86) Internationale Anmeldenummer: PCT/EP2015/051104
(87) Internationale Veröffentlichungsnummer: WO 2015/121036

(56) Entgegenhaltungen:
- WO-A2-2012/080970
- DE-A1- 2 852 064
- DE-A1-102010 044 200
- JP-A- S60 126 592
- S. GÖPPERT ET AL: "Be- und Entladesysteme für thermische Schichtenspeicher: Teil 1 - Überblick", CHEMIE INGENIEUR TECHNIK, Bd. 80, Nr. 3, 1. März 2008 (2008-03-01), Seiten 287-293, XP055190647, ISSN: 0009-286X, DOI: 10.1002/cite.200700162 in der Anmeldung erwähnt

## Beschreibung

Die Erfindung betrifft eine Verfahren und eine Vorrichtung zur Entladung eines thermischen Schichtspeichers.

Thermische Schichtspeicher ermöglichen es die Erzeugung von Energie von deren Verwendung zeitlich zu entkoppeln. Insbesondere bei fluktuierenden Energiequellen, wie beispielsweise regenerativen Energien, stellt eine solche zeitliche Entkoppelung die Versorgung mit Energie, insbesondere elektrische Energie, sicher. Thermische Schichtspeicher können zum Entladen mit generellen Dampfkreisläufen und/oder ORC-Anlagen (Organischer-Rankine-Zyklus, eng. Organic-Rankine-Cycle; ORC) gekoppelt werden. Durch die Verwendung eines mit einer ORC-Anlage gekoppelten thermischen Schichtspeichers kann somit die Erzeugung thermischer Energie und die Abgabe elektrischer Energie und/oder thermischer Energie, wobei die elektrische Energie durch die ORC-Anlage bereitgestellt wird, an einen Energieverbraucher zeitlich entkoppelt werden, wodurch beispielsweise Lastspitzen im Energiebedarf ausgeglichen werden können, so dass sich insgesamt die Versorgungssicherheit verbessert.

Ein thermischer Schichtspeicher kann mittels einer ORC-Anlage entladen werden. Hierbei wird die Wärme über Wandungen eines Wärmeüberträgers auf ein Arbeitsfluid der ORC-Anlage übertragen. Zur Sicherstellung des Wärmetransportes von dem thermischen Schichtspeicher auf das Arbeitsfluid der ORC-Anlage sind bestimmte Temperaturdifferenzen als treibende Kraft für den Wärmetransport erforderlich. Gleichzeitig begrenzen die genannten Temperaturdifferenzen das Temperaturniveau der dem Schichtspeicher entnehmbaren thermischen Energie (Wärme), d.h. deren Nutzwert. Ferner muss für die Wärmeübertragungsflächen eines Wärmeüberträgers Bauraum zur Verfügung gestellt werden, der nicht für die Speicherung thermischer Energie im thermischen Schichtspeicher nutzbar ist.

Ein thermischer Schichtspeicher mit einem Wärmeüberträger, der Wärmeübertragungsflächen aufweist, wird mittels der ORC-Anlage entladen, indem ein Arbeitsfluid der ORC-Anlage auf der Primärseite innerhalb des Wärmeüberträgers Wärme vom Wärmeträger des Schichtspeichers (Sekundärseite) aufnimmt.

Aus dem Stand der Technik ist bekannt, für die Aufnahme der Wärme, den Wärmeträger des thermischen Schichtspeichers durch einen Verdampfer der ORC-Anlage zu leiten. Weiterhin ist aus dem Stand der Technik bekannt, das Arbeitsfluid der ORC-Anlage durch einen Verdampfer zu führen, welcher sich innerhalb des thermischen Schichtspeichers und im thermischen Kontakt mit dem Wärmeträger des thermischen Schichtspeichers befindet. Mit anderen Worten wird die Wärme vom thermischen Schichtspeicher stets durch einen Verdampfer, in dem eine Verdampfung des Arbeitsfluids der ORC-Anlage stattfindet, auf die ORC-Anlage übertragen, wobei sich der Verdampfer im erstgenannten Fall außerhalb und im zweitgenannten Fall innerhalb des thermischen Schichtspeichers befindet. Für eine effiziente Übertragung der Wärme vom Wärmeträger auf das Arbeitsfluid weisen die Verdampfer nach dem Stand der Technik großräumige Wärmeübertragungsflächen auf, die zum einen einen großen Bauraumbedarf erfordern und zum anderen die Wirtschaftlichkeit des thermischen Schichtspeichers aufgrund der hohen Investitionskosten verringern.

Aus der DE 28 52 064 A1 ist eine Vorrichtung zum Entladen eines thermischen Schichtspeichers bekannt. Zum Entladen des thermischen Schichtspeichers wird ein Arbeitsfluid einer ORC-Anlage (Tiefsiedemedium) in den thermischen Schichtspeicher eingeleitet und im direkten Kontakt mit dem Wärmeträger des thermischen Schichtspeichers verdampft.

Die DE 10 2010 044200 A1 offenbart einen geregelten Druckspeicher mit Wasser als Wärmeträger.

Der Erfindung liegt folglich die Aufgabe zugrunde, das Entladen eines thermischen Schichtspeichers zu verbessern.

Die Aufgabe wird durch ein Verfahren mit den Merkmalen des unabhängigen Anspruches 1 und durch eine Vorrichtung mit den Merkmalen des unabhängigen Anspruches 13 gelöst. In den abhängigen Ansprüchen sind vorteilhafte Ausgestaltungen und Weiterbildungen der Erfindung angegeben.

Bei dem erfindungsgemäßen Verfahren zum Entladen eines thermischen Schichtspeichers wird in einem ersten thermischen Schichtspeicher, der in einem ersten Teilbereich eine erste und in einem zweiten Teilbereich eine in Bezug auf die erste Temperatur höhere zweite Temperatur aufweist, wobei der zweite Teilbereich geodätisch oberhalb des ersten Teilbereiches angeordnet ist, ein Arbeitsfluid eines Organischen-Rankine-Zyklus im flüssigen Aggregatzustand in einen flüssigen Wärmeträger des ersten thermischen Schichtspeichers in den ersten oder zweiten Teilbereich eingeleitet und in direkten stofflichen Kontakt mit dem Wärmeträger gebracht, wobei die Dichte des Arbeitsfluides geringer als die Dichte des Wärmeträgers ist, und im zweiten Teilbereich bei der zweiten Temperatur der Druck im ersten thermischen Schichtspeicher kleiner oder gleich dem Dampfdruck des Arbeitsfluides ist.

Erfindungsgemäß wird das Arbeitsfluid einer ORC-Anlage im flüssigen Aggregatzustand in den flüssigen Wärmeträger des Schichtspeichers direkt eingeleitet, wodurch ein direkter stofflicher Kontakt zwischen Wärmeträger und Arbeitsfluid erfolgt. Hierbei sind grundsätzlich zwei Fälle zu unterscheiden. Zum einen kann das Arbeitsfluid der ORC-Anlage eine größere Dichte als der Wärmeträger aufweisen. Zum anderen ist eine kleinere Dichte des Arbeitsfluides in Bezug auf den Wärmeträger möglich. Erfindungsgemäß ist die Dichte des Arbeitsfluids geringer als die Dichte des Wärmeträgers.

Ist die Dichte des Arbeitsfluides im Gegensatz zur vorliegenden Erfindung größer als die des Wärmeträgers, so ist ein Einleiten des Arbeitsfluides in den zweiten Teilbereich des thermischen Schichtspeichers bevorzugt. Bei einer erfindungsgemäß geringeren Dichte des Arbeitsfluides in Bezug auf den flüssigen Wärmeträger im thermischen Schichtspeicher ist erfindungsgemäß ein Einleiten des Arbeitsfluides in den ersten Teilbereich des thermischen Schichtspeichers vorgesehen.

Bei einer erfindungsgemäß kleineren Dichte des Arbeitsfluides in Bezug auf die Dichte des flüssigen Wärmeträgers ist eine Einleitung des Arbeitsfluides in den ersten Teilbereich des thermischen Schichtspeichers vorgesehen. Erfindungsgemäß weist der erste Teilbereich des thermischen Schichtspeichers eine kleinere Temperatur als der zweite Teilbereich des thermischen Schichtspeichers auf. Mit anderen Worten ist die erste Temperatur geringer als die zweite Temperatur. Durch die geringere Dichte des Arbeitsfluides in Bezug auf die Dichte des Wärmeträgers steigt das flüssig in den Wärmeträger eingeleitete Arbeitsfluid im Schichtspeicher auf und tritt dabei erfindungsgemäß in den zweiten Teilbereich des thermischen Schichtspeichers ein. Hierbei liegt erfindungsgemäß der zweite Teilbereich bezogen auf die am Ort des Schichtspeichers vorherrschende Schwerkraft oberhalb des ersten Teilbereiches. Erfindungsgemäß führt somit der direkte stoffliche Kontakt und das Aufsteigen des flüssigen Arbeitsfluides in den zweiten Teilbereich des thermischen Schichtspeichers zu einer Verdampfung des flüssigen Arbeitsfluides im zweiten Teilbereich des thermischen Schichtspeichers. Das ist deshalb der Fall, da der Druck im thermischen Schichtspeicher im zweiten Teilbereich kleiner oder gleich dem Dampfdruck des Arbeitsfluides ist. Der Dampfdruck des Arbeitsfluides hängt hierbei von der zweiten Temperatur im zweiten Teilbereich des thermischen Schichtspeichers ab und ist entsprechend der genannten zweiten Temperatur anzupassen. Als Dampfdruck wird der Druck bezeichnet, bei dem das flüssige Arbeitsfluid der ORC-Anlage von dem flüssigen in den gasförmigen Aggregatzustand übergeht, und zwar bei der Temperatur, die im zweiten Teilbereich des thermischen Schichtspeichers vorliegt, d.h. bei der zweiten Temperatur. Mit anderen Worten wird der Verdampfungspunkt des flüssigen Arbeitsfluides im zweiten Teilbereich des thermischen Schichtspeichers erreicht. Durch den direkten stofflichen Kontakt des flüssigen Arbeitsfluides mit dem flüssigen Wärmeträger des Schichtspeichers und der dadurch im zweiten Teilbereich erfolgenden Verdampfung des Arbeitsfluides wird die Wärme des thermischen Schichtspeichers im zweiten Teilbereich direkt vom Wärmeträger des thermischen Schichtspeichers auf das Arbeitsfluid über den Verdampfungsprozess übertragen. Erfindungsgemäß entfallen somit zusätzliche Verdampfer mit Wärmeüberträgern und/oder Wärmeübertragungsflächen. Durch das erfindungsgemäße Entfallen von Verdampfern, Wärmeüberträgern und/oder Wärmeübertragungsflächen können zusätzliche Verluste an thermischer Energie in oder an den genannten Bauteilen vermieden werden, wodurch die Effizienz des Entladens des thermischen Schichtspeichers erhöht wird.

Ein weiterer Vorteil des erfindungsgemäßen direkten stofflichen Kontaktes des flüssigen Arbeitsfluides mit dem flüssigen Wärmeträger des thermischen Schichtspeichers ist, dass eine höhere zweite Temperatur und folglich ein höherer Dampfdruck erreichbar ist. Wird vorteilhafterweise das im thermischen Schichtspeicher verdampfte Arbeitsfluid zu einer Turbine der ORC-Anlage zurückgeführt, so kann dadurch der Eingangsdruck, der im Wesentlichen dem Dampfdruck entspricht, in die Turbine erhöht werden, wodurch eine höhere Effizienz in der elektrischen Stromerzeugung der ORC-Anlage ermöglicht wird.

Besitzt das flüssige Arbeitsfluid der ORC-Anlage nicht erfindungsgemäß eine größere Dichte als der flüssige Wärmeträger im thermischen Schichtspeicher, so ist eine Einleitung des flüssigen Arbeitsfluides in den zweiten Teilbereich des thermischen Schichtspeichers vorgesehen. Mit anderen Worten wird das flüssige Arbeitsfluid direkt in einen Teilbereich des thermischen Schichtspeichers eingeleitet und in stofflichen Kontakt mit dem Wärmeträger gebracht, in dem der Druck kleiner oder gleich dem Dampfdruck des Arbeitsfluides ist. Dadurch tritt unmittelbar nach Austritt des Arbeitsfluides in den thermischen Schichtspeicher eine Verdampfung des Arbeitsfluides auf. Vorteilhafterweise wird das flüssige Arbeitsfluid der ORC-Anlage in einen Teilbereich des thermischen Schichtspeichers eingeleitet, der eine möglichst hohe (zweite) Temperatur aufweist. Das nach dem stofflichen Kontakt mit dem Wärmeträger im thermischen Schichtspeicher verdampfte Arbeitsfluid weist nach der Verdampfung eine geringere Dichte als der flüssige Wärmeträger auf und kann folglich im dampfförmigen Aggregatzustand zur Turbine der ORC-Anlage geleitet werden. Wiederum wird die Wärme des thermischen Schichtspeichers über den Verdampfungsprozess des Arbeitsfluides auf das Arbeitsfluid übertragen und in den Arbeitskreislauf der ORC-Anlage eingeführt.

Generell ist es von Vorteil, ein Arbeitsfluid für die ORC-Anlage zu verwenden, das einen Dampfdruck aufweist, der dem Druck im thermischen Schichtspeicher bei einer möglichst hohen (zweiten) Temperatur entspricht. Mit anderen Worten verdampft das Arbeitsfluid erst bei einer möglichst hohen (zweiten) Temperatur, die bestenfalls gleich der Höchsttemperatur im thermischen Schichtspeicher ist. Dadurch wird vorteilhafterweise die Effizienz der Wärmeübertragung von dem Wärmeträger auf das Arbeitsfluid der ORC-Anlage verbessert.

Die erfindungsgemäße Vorrichtung zum Entladen eines thermischen Schichtspeichers umfasst eine Anlage, die zur Durchführung eines Organischen-Rankine-Zyklus ausgebildet ist und einen ersten thermischen Schichtspeicher, der in einem ersten Teilbereich eine erste Temperatur und in einem zweiten Teilbereich eine in Bezug auf die erste Temperatur höhere zweite Temperatur aufweist, wobei der erste thermische Schichtspeicher und die Anlage derart ausgestaltet und gekoppelt sind, dass das Arbeitsfluid des Organischen-Rankine-Zyklus im flüssigen Aggregatzustand in einen flüssigen Wärmeträger des ersten thermischen Schichtspeichers in den ersten oder zweiten Teilbereich eingeleitet und in direkten stofflichen Kontakt mit dem Wärmeträger gebracht wird, wobei die Dichte des Arbeitsfluides (41) geringer als die Dichte des Wärmeträgers (10) ist, und im zweiten Teilbereich bei der zweiten Temperatur der Druck im ersten thermischen Schichtspeicher kleiner oder gleich dem Dampfdruck des Arbeitsfluides ist.

Die erfindungsgemäße Vorrichtung ermöglicht einen direkten stofflichen Kontakt des flüssigen und in Folge auch des verdampften (gasförmigen) Arbeitsfluides mit dem flüssigen Wärmeträger des thermischen Schichtspeichers. Es ergeben sich zum bereits dargelegten erfindungsgemäßen Verfahren gleichartige Vorteile.

In einer Weiterbildung der Erfindung wird im ersten thermischen Schichtspeicher verdampftes Arbeitsfluid in den Organischen-Rankine-Zyklus zurückgeführt.

Durch die Rückführung des verdampften und somit gasförmigen Arbeitsfluides wird ein besonders vorteilhafter Kreisprozess zum Entladen des thermischen Schichtspeichers ermöglicht. Es kann vorgesehen sein das verdampfte Arbeitsfluid vor der Rückführung in den Arbeitskreislauf in der ORC-Anlage durch einen Abscheider zu leiten, der im verdampften Arbeitsfluid vorhandene Reste des Wärmeträgers abscheidet, so dass kaum, bestenfalls kein Wärmeträger in den Arbeitskreis der ORC-Anlage ausgetragen wird. Die nach dem Verdampfen des Arbeitsfluides zu erfolgende stoffliche Trennung von Arbeitsfluid und Wärmeträger ist nicht auf die Verwendung von Abscheider eingeschränkt und kann mit nach dem Stand der Technik bekannten und/oder äquivalenten Vorrichtungen erfolgen.

Gemäß der Erfindung wird ein Arbeitsfluid verwendet, dessen Dichte vor der Verdampfung im thermischen Schichtspeicher kleiner der Dichte des Wärmeträgers ist.

Die gegenüber dem flüssigen Wärmeträger kleinere Dichte des flüssigen Arbeitsfluides hat den Vorteil, dass das Arbeitsfluid in den ersten Teilbereich bei der ersten Temperatur des thermischen Schichtspeichers eingeleitet oder eingebracht werden kann. Durch die Wirkung der Schwerkraft, die am Ort des thermischen Schichtspeichers vorherrscht, steigt das im Vergleich zum Wärmeträger weniger dichtere Arbeitsfluid zum zweiten Teilbereich des thermischen Schichtspeichers auf. Hierbei liegt der erste Teilbereich des thermischen Schichtspeichers unterhalb des zweiten Teilbereiches, wobei die relativen Begriffe oben und unten, wie bekannt, auf die vorherrschende Richtung der Schwerkraft bezogen sind. Typischerweise wird der Wärmeträger im thermischen Schichtspeicher dadurch im zweiten Teilbereich eine zweite Temperatur aufweisen, die größer ist als die erste Temperatur des ersten Teilbereichs des thermischen Schichtspeichers. Der Vorteil der geringeren Dichte des flüssigen Arbeitsfluides und des daraus resultierenden Aufsteigen des Arbeitsfluides ist, dass das Arbeitsfluid bis zur im zweiten Teilbereich vorliegenden zweiten Temperatur des thermischen Schichtspeichers erwärmt wird, wodurch der Wärmeübergang zwischen Wärmeträger und flüssigem Arbeitsfluid verbessert wird. Ein weiterer Vorteil ist, dass das flüssige Arbeitsfluid durch das Aufsteigen stetig mit dem Wärmeträger des thermischen Schichtspeichers im stofflichen Kontakt ist, so dass eine langsame Erwärmung des Arbeitsfluides von der ersten Temperatur zur zweiten Temperatur erfolgt.

In einer vorteilhaften Ausgestaltung der Erfindung wird ein Arbeitsfluid verwendet, das bei einer Temperatur von 130 °C (403,15 K) einen Dampfdruck aufweist, der geringer als 1 MPa ist.

Arbeitsfluide, die bei einer Temperatur von 130 °C einen Dampfdruck von weniger als 1 MPa aufweisen, werden hier als Niederdruckfluide bezeichnet. Ein Vorteil solcher Niederdruckfluide ist, dass diese in Kombination mit bekannten thermischen Schichtspeichern eine besonders bevorzugte Anwendung des erfindungsgemäßen Verfahrens ermöglichen. Das ist deshalb der Fall, da nach dem Stand der Technik typische thermische Schichtspeicher, insbesondere Wasserschichtspeicher, einen Druck aufweisen, der geringer als 1 MPa ist und der insbesondere im Bereich von 0,3 MPa bis 1 MPa liegt. Hierbei sollte das Arbeitsfluid der ORC-Anlage bei einer möglichst hohen zweiten Temperatur verdampfen. Dadurch muss der Druck unterhalb des zweiten Teilbereichs im thermischen Schichtspeicher stets größer als der Dampfdruck des Arbeitsfluides sein. Erst im zweiten Teilbereich des thermischen Schichtspeichers bei der zweiten Temperatur, beispielsweise bei einer zweiten Temperatur von 130 °C, tritt eine Verdampfung des Arbeitsfluides ein.

In ORC-Anlagen eingesetzte typische Arbeitsfluide, wie beispielsweise R245fa, besitzen bei 130 °C einen Dampfdruck, der im Bereich von 2 MPa bis 3 MPa liegt. Der Dampfdruck der genannten Arbeitsfluide ist daher deutlich größer als der Druck, der typischerweise im gesamten thermischen Schichtspeicher vorliegt, so dass bei einer Einleitung des Arbeitsfluides bei einer Temperatur von beispielsweise 50 °C bereits eine Verdampfung des Arbeitsfluides erfolgen könnte. Nach dem Stand der Technik typische Arbeitsfluide, beispielsweise R245fa, würden folglich bereits bei einer im Vergleich zur im thermischen Schichtspeicher vorliegenden Höchsttemperatur geringeren (ersten) Temperatur verdampfen, so dass die Wärmeübertragung vom Wärmeträger des thermischen Schichtspeichers auf das eingeleitete Arbeitsfluid der ORC-Anlage auf einem ungünstigen niedrigen Temperaturniveau erfolgt würde. Niederdruckfluide hingegen weisen einen Dampfdruck auf, der im Bereich der in Schichtspeichern vorherrschenden Drücke liegt, so dass diese erst bei Erreichen der zweiten Temperatur verdampfen.

Von besonderem Vorteil sind Arbeitsfluide, die wenigstens einen der Stoffe 1,1,1,2,2,4,5,5,5-Nonafluoro-4-(Trifluoromethyl)-3-Pentanone (Handelsname Novec^{™} 649), Perfluormethylbutanon, 1-Chloro-3,3,3-trifluoro-1-propene, Cis-1,1,1,4,4,4-hexafluoro-2-butene und/oder Cyclopentan umfassen.

Die genannten Stoffe können gemäß der vorliegenden Erfindung in Kombination mit nach dem Stand der Technik bekannten thermischen Schichtspeichern eingesetzt werden. Beispielsweise weist 1,1,1,2,2,4,5,5,5-Nonafluoro-4-(Trifluoromethyl)-3-Pentanone (Handelsname Novec^{™} 649) bei einer Temperatur von 130 °C einen Dampfdruck von 0,87 MPa und Cyclopentan einen Dampfdruck von 0,8 MPa auf. Der Dampfdruck der genannten Fluide liegt somit bei 130 °C deutlich unter dem Dampfdruck von beispielsweise R245fa, das einen Dampfdruck von 2,34 MPa besitzt. Ein weiterer Vorteil der genannten Stoffe ist deren technische Handhabbarkeit. Sie zeichnen sich durch eine gute Umweltverträglichkeit sowie durch ihre Sicherheitseigenschaften, wie beispielsweise keine Brennbarkeit und ein sehr geringes Treibhauspotential aus. Allgemein sind die Stoffe Novec^{™} 649 und Perfluormethylbutanon der Stoffgruppe der Fluorketone zuzuordnen, während Cyclopentan der Stoffgruppe der Cycloalkane zuzuordnen ist.

Gemäß einer weiteren vorteilhaften Ausgestaltung der Erfindung wird Wasser als flüssiger Wärmeträger verwendet.

Wasser als Wärmeträger zeichnet sich durch seine im Vergleich zu anderen Wärmeträgern hohe spezifische Wärmekapazität aus. Dadurch besitzt der thermische Schichtspeicher, der dann als thermischer Wasserschichtspeicher ausgebildet ist, bei typischen Temperaturunterschieden zwischen einer Einspeicher- und Ausspeichertemperatur des thermischen Schichtspeichers eine im Vergleich zu anderen Schichtspeichern erhöhte Speicherkapazität. Insbesondere ist Wasser typischerweise in ausreichenden Mengen verfügbar. Ein weiterer Vorteil von Wasser als Wärmeträger ist, dass Wasser sich nur schlecht in den genannten Arbeitsfluiden, beispielsweise in Novec^{™} 649 oder Cyclopentan, löst.

Wird Wasser als Wärmeträger im thermischen Schichtspeicher eingesetzt, so ist insbesondere ein geregelter Druckspeicher bzw. ein geregelter Wasserdruckspeicher als thermischer Schichtspeicher vorteilhaft.

Durch die Verwendung eines geregelten Druckspeichers kann der Druck im thermischen Schichtspeicher in einem Druckbereich geregelt werden. Durch die Regelung des Druckes im Druckspeicher kann der Druck innerhalb des Druckspeichers an den Dampfdruck des Arbeitsfluides angepasst werden, so dass es unabhängig von der zweiten Temperatur zu einer Verdampfung des Arbeitsfluides im zweiten Teilbereich des Druckspeichers kommt. Hierbei wird der Druck derart geregelt, dass unterhalb des zweiten Teilbereiches bei der unterhalb des zweiten Teilbereichs vorherrschenden Temperatur keine Verdampfung des Arbeitsfluides auftritt. Dadurch kann eine Verdampfung des flüssigen Arbeitsfluides in einer möglichst warmen Schicht des Druckspeichers erreicht werden. Hierbei ist die Temperatur des Druckspeichers und auch eines generellen thermischen Schichtspeichers mit der Höhe der Schicht korreliert, so dass eine möglichst hohe Verdampfungsstelle einer möglichst hohen Temperatur entspricht. Insbesondere ist es von Vorteil, wenn der thermische Schichtspeicher in einem Teilbereich, in dem das verdampfte (gasförmige) Arbeitsfluid aus dem thermischen Schichtspeicher ausgeleitet und in die Turbine der ORC-Anlage geleitet wird, den Eintrittsdruck für die Turbine aufweist, wobei ein möglichst großer Eintrittsdruck bevorzugt ist. Folglich ist der Druck unterhalb des zweiten Teilbereiches, insbesondere im ersten Teilbereich des ersten thermischen Schichtspeichers größer als im zweiten Teilbereich des thermischen Schichtspeichers, da sich der hydrostatische Druck im Schichtspeicher mit der Höhe verringert.

Gemäß einer weiteren vorteilhaften Ausgestaltung der Erfindung wird ein Arbeitsfluid verwendet, das im flüssigen Aggregatzustand mit dem Wärmeträger kaum, insbesondere nicht mischbar ist.

Mit den anderen Worten bilden das flüssige Arbeitsfluid und der flüssige Wärmeträger eine zweiphasige Flüssigkeit aus, wobei die eine Phase durch das flüssige Arbeitsfluid und die andere Phase durch den flüssigen Wärmeträger gebildet wird. Vorgesehen kann auch ein Arbeitsfluid sein, das eine geringe Mischbarkeit mit dem Wärmeträger im flüssigen Aggregatzustand aufweist. Insbesondere ist ein Arbeitsfluid bevorzugt, dass eine geringe Löslichkeit sowohl im flüssigen als auch im gasförmigen Aggregatzustand in dem Wärmeträger aufweist.

Durch das zweiphasige Vorliegen der Mischung von Arbeitsfluid und Wärmeträger ist eine stoffliche Trennung der genannten Fluide in einfacher Weise möglich. Insbesondere vermischt sich das flüssige Arbeitsfluid nicht mit dem Wärmeträger, so dass dadurch Rückstände des Arbeitsfluides, die sich im Wärmeträger ansammeln könnten, reduziert werden. Insbesondere sind die bereits genannten Niederdruckfluide Novec^{™} 649, Perfluormethylpentanon und Cyclopentan in Wasser, das als Wärmeträger besonders bevorzugt ist, schlecht löslich und daher nur in geringen Mengen mit Wasser mischbar. Beispielsweise lösen sich nur 20 ppm Wasser in Novec^{™} 649.

In einer weiteren Ausgestaltung der Erfindung wird das flüssige Arbeitsfluid mittels einer Verteileinrichtung in den Wärmeträger eingeleitet, wobei die Verteileinrichtung das Arbeitsfluid in einer Schicht konstanter erster oder zweiter Temperatur des Wärmeträgers homogen verteilt.

Thermische Schichtspeicher, beispielsweise Wasserschichtspeicher oder geregelte Wasserschichtspeicher (Druckspeicher) besitzen bezüglich der Temperatur ihres Wärmeträgers einen geschichteten Aufbau, wobei jede Schicht eine bestimmte Temperatur und Dichte aufweist. Im Hinblick auf die Effizienz des Wärmeübergangs vom Wärmeträger zum Arbeitsfluid ist es daher von Vorteil das flüssige Arbeitsfluid in einer dieser Schichten gleichmäßig bzw. homogen zu verteilen. Die Begriffe gleichmäßig und homogen sowie die Temperatur oder Dichte einer Schicht sind stets näherungsweise zu verstehen.

Typische Schichtspeicher sind vertikal - relativ zur am Ort des Schichtspeichers vorherrschenden Schwerkraft - ausgerichtet, so dass die einzelnen Schichten des Schichtspeichers sich horizontal erstrecken. Durch die gleichmäßige Verteilung des flüssigen Arbeitsfluides in einer Schicht des flüssigen Wärmeträgers, insbesondere in einer Schicht, die sich im ersten oder im zweiten Teilbereich des thermischen Schichtspeicher befindet, wird die Oberfläche des stofflichen Kontaktes (Kontaktoberfläche) zwischen dem Wärmeträger und dem flüssigen Arbeitsfluid vergrößert, wodurch die Effizienz des Wärmeübergangs vom Wärmeträger auf das Arbeitsfluid verbessert wird.

Zusätzlich wird durch eine gleichmäßige Verteilung des flüssigen Arbeitsfluides in einer horizontalen Schicht des thermischen Schichtspeichers eine möglichst gleichmäßige Verteilung der Impulse des eintretenden Arbeitsfluides ermöglicht, so dass nicht erwünschte Mischvorgänge, die möglicherweise zu einem Durchmischen der Schichten führen, verhindert werden können.

Als Verteilvorrichtungen kommen beispielsweise horizontale Verteilrohrsysteme, wie sie in Schichtspeichern zur Anwendung kommen, in Frage. Insbesondere führen die dort bekannten Verteilvorrichtungen zu einer Reduzierung der Eintrittsgeschwindigkeit des Arbeitsfluides in den Wärmeträger (vgl. Göppert et al. Chemie Ingenieur Technik, 2008, 80 Nr. 3). Weiterhin kann die Eintrittsgeschwindigkeit des gasförmigen Arbeitsfluides durch eine Änderung der Querschnittsfläche von Eintrittslöchern der Verteilvorrichtung reguliert werden. Ein weiterer Vorteil der Regulierung der Querschnittsflächen der Eintrittslöcher ist, dass eine Primärblasengröße des gasförmigen Arbeitsfluides eingestellt werden kann.

In einer weiteren vorteilhaften Ausgestaltung der Erfindung wird im Wärmeträger angesammeltes Arbeitsfluid in den Organischen-Rankine-Zyklus der ORC-Anlage zurückgeführt.

Durch den erfindungsgemäßen direkten stofflichen Kontakt des flüssigen und/oder gasförmigen Arbeitsfluides mit dem Wärmeträger des thermischen Schichtspeichers ist ein Einbringen des Arbeitsfluides in den Wärmeträger des thermischen Schichtspeichers prinzipiell nicht zu verhindern. Dieses sich im Wärmeträger des thermischen Schichtspeichers ansammelnde Arbeitsfluid wird vorteilhafterweise vom Wärmeträger des thermischen Schichtspeichers getrennt und dem Organischen-Rankine-Zyklus der ORC-Anlage wieder zugeführt. Die stoffliche Trennung von im Wärmeträger angesammelten Arbeitsfluid und dem Wärmeträger kann mit nach dem Stand der Technik bekannten und/oder äquivalenten Trennvorrichtungen und/oder Abscheidern erfolgen.

Gemäß einer weiteren vorteilhaften Ausgestaltung der Erfindung wird ein Phasenwechselmaterial (eng. Phase-Change Material; PCM) im thermischen Schichtspeicher zur Speicherung thermischer Energie verwendet.

Der Schichtspeicher umfasst somit zwei Wärmeträger, wobei der weitere Wärmeträger als ein Phasenwechselmaterial ausgebildet ist. Phasenwechselmaterialien bzw. Phasenwechselspeicher sind bevorzugt, da sie thermische Energie verlustarm mit vielen Wiederholzyklen und über einen langen Zeitraum speichern können. Insbesondere ist ein Phasenwechselmaterial bevorzugt, dessen Schmelztemperatur (Phasenwechseltemperatur) kleiner als die Verdampfungstemperatur (zweite Temperatur) des flüssigen Arbeitsfluides ist (beim Dampfdruck). Beispielsweise kann die Verdampfungstemperatur des flüssigen Arbeitsfluides im zweiten Teilbereich 130 °C betragen, so dass eine Schmelztemperatur von 125 °C des Phasenwechselmaterials bevorzugt ist. Bevorzugt ist somit eine Schmelztemperatur, die höchstens 5 % geringer als die Verdampfungstemperatur ist.

Vorzugsweise kann der Schichtspeicher weitere im festen Aggregatzustand vorliegende Wärmeträger umfassen. Hierbei kann die Porosität der festen Wärmeträger dem Zweck angepasst sein. Beispielsweise kann die Porosität derart gewählt sein, dass ein Aufsteigen des flüssigen Arbeitsfluides, das eine geringere Dichte als der flüssige Wärmeträger aufweist, ermöglicht wird.

Gemäß einer besonders bevorzugten Ausgestaltung der Erfindung wird ein zweiter thermischer Schichtspeicher, welcher zweite thermische Schichtspeicher mit dem ersten thermischen Schichtspeicher fluidisch über den Wärmeträger gekoppelt ist, verwendet, wobei dem ersten thermischen Schichtspeicher im zweiten Teilbereich Wärmeträger des zweiten thermischen Schichtspeichers mit einer zweiten Temperatur zugeführt wird, und im ersten Teilbereich des ersten thermischen Schichtspeichers Wärmeträger des ersten thermischen Schichtspeichers mit einer ersten Temperatur zum zweiten thermischen Schichtspeicher zurückgeführt wird.

Bevorzugt ist hierbei ein zweiter thermischer Schichtspeicher, der aufgrund des in ihm vorhandenen flüssigen Wärmeträgers eine wesentlich größere Wärmekapazität aufweist als der erste thermische Schichtspeicher. Vorteilhafterweise wird dadurch der Verdampfungsprozess des Arbeitsfluides bezüglich des zweiten thermischen Schichtspeichers in den ersten thermischen Schichtspeicher ausgelagert. Dadurch kann eine unerwünschte Störung und/oder Durchmischung der Schichten im zweiten thermischen Schichtspeicher, der aufgrund seiner gegenüber dem ersten thermischen Schichtspeicher wesentlich erhöhten Wärmekapazität den eigentlichen thermischen Schichtspeicher zur Speicherung der thermischen Energie ausbildet, vermieden werden.

Der erste und der zweite thermische Schichtspeicher sind derart gekoppelt, dass der Wärmeträger bei der zweiten Temperatur (warm) in den zweiten Teilbereich des ersten thermischen Schichtspeichers eingeleitet wird und Wärmeträger mit einer ersten Temperatur (kalt) aus dem ersten Teilbereich des ersten thermischen Schichtspeichers zum zweiten thermischen Schichtspeicher zurückgeführt wird. Mit anderen Worten wird der zweite thermische Schichtspeicher mittels des ersten thermischen Schichtspeichers entladen.

Gemäß einer weiteren vorteilhaften Ausgestaltung der Erfindung umfasst der erste thermische Schichtspeicher eine Verteileinrichtung, die zu einer homogenen Verteilung flüssigen Arbeitsfluides in einer Schicht konstanter erster oder zweiter Temperatur des Wärmeträgers ausgebildet ist.

Durch eine gleichmäßige Verteilung des Arbeitsfluides in einer horizontalen Schicht des thermischen Schichtspeichers wird eine vorteilhafte Verteilung des Arbeitsfluides im flüssigen Wärmeträger geschaffen, die zudem ein mögliches Durchmischen der Schichten verhindert. Es ergeben sich zum bereits dargelegten Verfahren zur Verwendung einer Verteileinrichtung gleichartige und gleichwertige Vorteile.

Gemäß einer weiteren vorteilhaften Ausgestaltung der Erfindung umfasst die Vorrichtung einen zweiten Schichtspeicher, wobei der erste und der zweite thermische Schichtspeicher derart ausgestaltet und fluidisch über den Wärmeträger gekoppelt sind, dass dem ersten thermischen Schichtspeicher im zweiten Teilbereich Wärmeträger des zweiten thermischen Schichtspeichers mit einer zweiten Temperatur zugeführt wird und dem ersten Teilbereich des ersten thermischen Schichtspeichers Wärmeträger des ersten thermischen Schichtspeichers mit einer ersten Temperatur zum zweiten thermischen Schichtspeicher zurückgeführt wird.

Bevorzugt ist, wie bereits beim Verfahren ein zweiter thermischer Schichtspeicher, der eine wesentlich größere Wärmekapazität als der erste thermische Schichtspeicher besitzt. Der zweite thermische Schichtspeicher ermöglicht somit eine Auslagerung des Verdampfungsprozesses aus dem zweiten thermischen Schichtspeicher, der den eigentlichen Schichtspeicher für die thermische Energie ausbildet, in den ersten thermischen Schichtspeicher. Hierbei wird die Wärme des zweiten thermischen Schichtspeichers, der fluidisch in der genannten Weise mit dem ersten thermischen Schichtspeicher über den flüssigen Wärmeträger gekoppelt ist, in den ersten thermischen Schichtspeicher übertragen und zur Verdampfung des Arbeitsfluides im ersten thermischen Schichtspeicher genutzt. Zusätzlich zu den genannten Vorteilen ergeben sich zum bereits diskutierten Verfahren gleichartige und gleichwertige Vorteile.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Figur 1: einen mit einer ORC-Anlage gekoppelten geregelten Druckspeicher, wobei ein Arbeitsfluid der ORC Anlage direkt in den Wärmeträger des Druckspeichers eingeleitet wird und eine geringere Dichte als der Wärmeträger aufweist;
- Figur 2: ein nicht erfindungsgemäßes Ausführungsbeispiel, das einen mit einer ORC-Anlage gekoppelten geregelten Druckspeicher zeigt, wobei ein Arbeitsfluid der ORC-Anlage direkt in den Wärmeträger des Schichtspeichers eingeleitet wird und das Arbeitsfluid im flüssigen Aggregatzustand eine größere Dichte als der Wärmeträger besitzt; und
- Figur 3: ein nicht erfindungsgemäßes Ausführungsbeispiel, das einen zweiten thermischen Druckspeicher zeigt, der mit einem ersten thermischen Druckspeicher mittels eines Wärmeträgers fluidisch gekoppelt ist.

Gleichartige Elemente können in den Figuren mit denselben Bezugszeichen versehen werden.

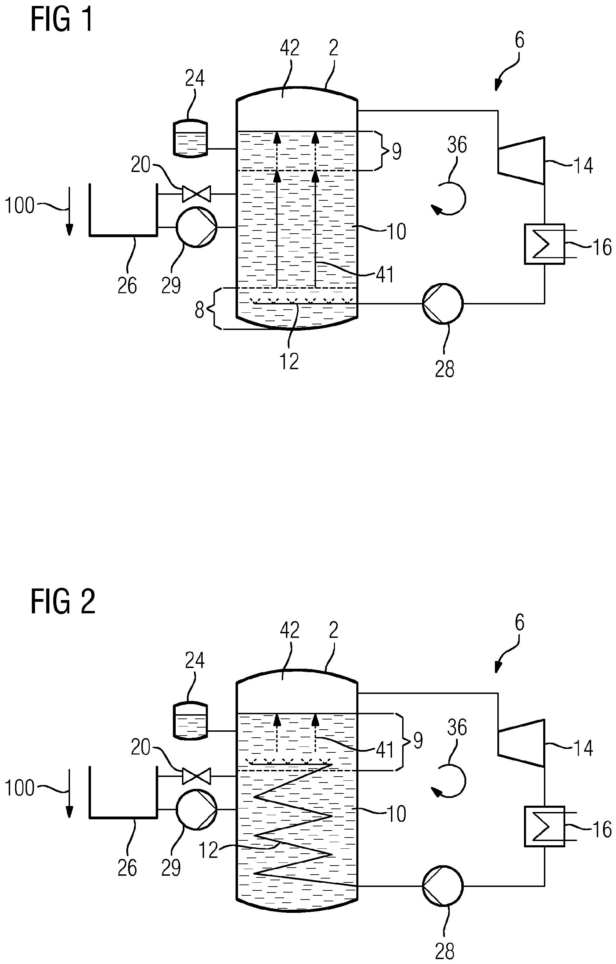

Figur 1 zeigt einen Druckspeicher 2, dessen Druck in einem Druckbereich regelbar ist. Hierbei ist der Druckspeicher 2 mit einer ORC-Anlage 6 derart gekoppelt, dass ein Arbeitsfluid 41 im flüssigen Aggregatzustand in einen Wärmeträger 10 des geregelten Druckspeichers 2 über eine Verteileinrichtung 12 eingeleitet wird. Hierbei umfasst die ORC-Anlage 6 eine Turbine 14, einen Kondensator 16 und eine Speisepumpe 28. Durch die genannten Komponenten der ORC-Anlage 6 wird somit ein Organischer-Rankine-Zyklus 36 ausgebildet.

Der Wärmeträger 10 des geregelten Druckspeichers 2 ist in diesem Ausführungsbeispiel Wasser 10. Ferner ist der geregelte Druckspeicher 2 bezüglich einer am Ort des Druckspeichers 2 vorherrschenden Schwerkraft 100 vertikal ausgerichtet. Dadurch weist der geregelte Druckspeicher 2 in einem ersten Teilbereich 8 eine erste Temperatur auf, die geringer ist als eine zweite Temperatur eines zweiten Teilbereiches 9 des thermischen Druckspeichers 2. Mit anderen Worten liegt der erste Teilbereich 8 bezogen auf die vertikale Ausrichtung des Druckspeichers 2 unterhalb des zweiten Teilbereiches 9.

Weiter ist in Figur 1 ein Ausdehnungsgefäß 24, eine Pumpe 29, ein Expansionsventil 20, und ein Vorratsbehälter 26 ersichtlich. Die genannten Bauteile 20, 24, 26, 29 dienen zur Regulierung des Druckspeichers 2 und/oder des Wärmeträgers 10.

Das flüssige Arbeitsfluid 41 der ORC-Anlage 6 wird über die Verteileinrichtung 12 derart in den ersten Teilbereich 8 des geregelten Druckspeichers 2 eingeleitet, dass der Wärmeträger 10 in direktem stofflichen Kontakt mit dem Arbeitsfluid 41 ist. Hierbei weist das Arbeitsfluid 41 eine geringere Dichte als der Wärmeträger 10 auf. Durch die geringere Dichte des Arbeitsfluides 41 steigt das Arbeitsfluid 41 innerhalb des Wärmeträgers 10 auf. Durch den Druck innerhalb des Druckspeichers 2 und durch den hydrostatischen Druck der Wassersäule tritt während des Aufstieges des Arbeitsfluides 41 keine Verdampfung des Arbeitsfluides 41 ein. Erst im zweiten Teilbereich 9 des Druckspeichers 2 ist der Druck im Druckspeicher 2 kleiner oder gleich dem Dampfdruck des Arbeitsfluides 41. Dadurch tritt erfindungsgemäß im zweiten Teilbereich 9 des Druckspeichers 2 eine Verdampfung des Arbeitsfluides 41 bei der zweiten Temperatur auf. Mit anderen Worten wird der Verdampfungspunkt des Arbeitsfluides 41 erst im zweiten Teilbereich 9 des thermischen Druckspeichers 2 erreicht. Dadurch wird vorteilhafter Weise die im Wärmeträger 10 gespeicherte Wärme auf einem möglichst hohen Temperaturniveau, dass der zweiten Temperatur im zweiten Teilbereich 9 des thermischen Druckspeichers 2 entspricht, auf das Arbeitsfluid 41, 42 übertragen.

Das verdampfte Arbeitsfluid 42 sammelt sich an einem oberen Ende des thermischen Druckspeichers 2 an und kann von dort wieder dem Arbeitskreislauf 36 der ORC-Anlage 6, insbesondere der Turbine 14, zugeführt werden.

Beispielsweise kann als Arbeitsfluid 41 Cyclopentan (C₅H₁₀) mit einer Dichte von 650 kg/m³ verwendet werden. Dadurch steigt das Arbeitsfluid 41 nach der Einleitung in den Druckspeicher 2 nach oben, da Wasser 10 eine Dichte von 1000 kg/m³ besitzt und somit deutlich dichter als Cyclopentan ist.

Figur 2 zeigt im Wesentlichen einen gleichartigen Aufbau wie Figur 1. Im Gegensatz zu Figur 1 und im Gegensatz zur vorliegenden Erfindung wird in Figur 2 ein Arbeitsfluid 41 verwendet, das eine größere Dichte als der Wärmeträger 10 besitzt. Hierbei ist wiederum Wasser als Wärmeträger 10 vorgesehen. Um eine Verdampfung des gegenüber dem Wärmeträger 10 dichteren Arbeitsfluides 41 bei einer möglichst hohen Temperatur des thermischen Druckspeichers 2 zu ermöglichen, ist vorgesehen das Arbeitsfluid 41 über die Verteileinrichtung 12 in den zweiten Teilbereich 9 des thermischen Druckspeichers 2 einzuleiten. Hierbei erfolgt die Einleitung des Arbeitsfluides 41 über ein Rohrsystem der Verteileinrichtung 12, wobei das Rohrsystem schraubenartig - in der Darstellung zickzackartig - von einem unteren Ende des Druckspeichers 2 zum zweiten Teilbereich 9 des thermischen Druckspeichers 2 verläuft. Mit anderen Worten verdampft das Arbeitsfluid 41 unmittelbar nach dem Austritt aus der Verteileinrichtung 12 im zweiten Teilbereich 9 des Druckspeichers 2.

Das verdampfte Arbeitsfluid 42, das durch den Verdampfungsprozess im zweiten Teilbereich 9 die Wärme aus dem thermischen Druckspeicher 2 bzw. aus dem Wärmeträger 10 bei der zweiten Temperatur aufnimmt, sammelt sich aufgrund seiner nun gegenüber dem Wärmeträger 10 geringeren Dichte an einem oberen Ende des thermischen Druckspeichers 2 an. Von dort kann das verdampfte (gasförmige) Arbeitsfluid 42 aus dem thermischen Druckspeicher 2 entnommen werden und der Turbine 14 der ORC-Anlage 6 zugeführt werden.

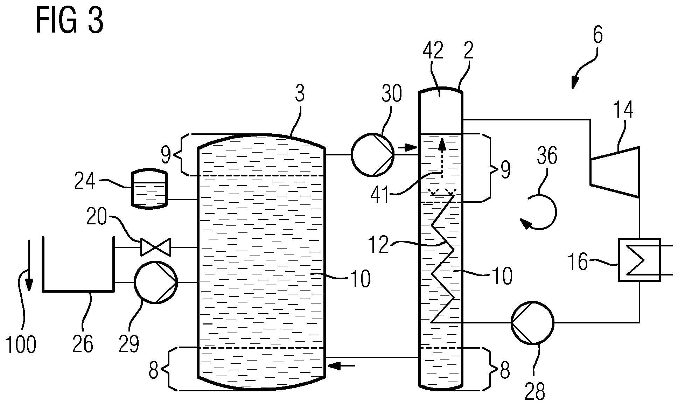

Figur 3 zeigt einen zweiten thermischen Druckspeicher 3, der fluidisch über den Wärmeträger 10 mit dem ersten thermischen Druckspeicher 2 gekoppelt ist. Hierbei weist der zweite thermische Druckspeicher 3 eine wesentlich größere Wärmekapazität als der erste thermische Druckspeicher 2 auf. Der erste thermische Druckspeicher 2 ist wie in Figur 2 dargestellt mit der ORC-Anlage 6 gekoppelt.

Das Arbeitsfluid 41 der ORC-Anlage 6 wird in den thermischen Druckspeicher 2 eingeleitet und in direkten stofflichen Kontakt mit dem Wärmeträger 10 gebracht. Hierbei besitzt das Arbeitsfluid 41, wie bereits in Figur 2 eine größere Dichte als der Wärmeträger 10.

Der zweite thermische Druckspeicher 3 ist aufgrund seiner gegenüber dem ersten Druckspeicher 2 vergrößerten Wärmekapazität der eigentliche thermische Druckspeicher, der zur Speicherung der thermischen Energie dient. In der Vorrichtung der Figur 3 ist somit der Verdampfungsprozess des Arbeitsfluides 41 von dem Ort der Speicherung der thermischen Energie entkoppelt. Hierfür wird dem zweiten thermischen Druckspeicher 3 in einem zweiten Teilbereich 9 Wärmeträger 10 über eine Pumpe 30 entnommen und dem zweiten Teilbereich 9 des ersten thermischen Druckspeichers 2 zugeführt. Mit anderen Worten verläuft der Wärmeübergang von dem zweiten thermischen Druckspeicher 3 zum ersten thermischen Druckspeicher 2 mittels des gemeinsamen Wärmeträgers 10. Anschließend wird die Wärme vom ersten thermischen Druckspeicher 2 über die Verdampfung des Arbeitsmittels 41 auf die ORC-Anlage 6 übertragen.

Vorteilhafterweise bildet der erste thermische Druckspeicher 2 für den zweiten thermischen Druckspeicher 3 eine Art Verdampfungssäule aus. Durch die Auslagerung des Verdampfungsprozesses aus dem zweiten thermischen Druckspeicher 3 in den ersten thermischen Druckspeicher 2 wird vorteilhafterweise ein Durchmischen der Schichten im zweiten thermischen Druckspeicher 3 vermieden.

Ein weiterer Vorteil der Auslagerung des Verdampfungsprozesses ist, dass dem thermischen Druckspeicher 3 in nach dem Stand der Technik bekannter Weise Wärme entzogen und zu einem nicht dargestellten Wärmeverbraucher geleitet werden kann. Dadurch wird folglich ein nach dem Stand der Technik bekannter zusätzlicher Entladungsvorgang des zweiten thermischen Druckspeichers 3 ermöglicht.

Die in Figur 1, 2 und 3 gezeigten Ausführungsbeispiele können zusätzlich Einbauten zum Beladen des thermischen Druckspeichers 2 und/oder des thermischen Druckspeichers 3 umfassen. Hierbei können die Druckspeicher 2, 3 durch eine direkte und/oder indirekte Zufuhr von Wärme beladen werden.

Bei der direkten Zufuhr von Wärme strömt warmer Wärmeträger 10 direkt in den Druckspeicher 2, 3 ein. Aufgrund des Einströmens des warmen Wärmeträgers 10 wird gleichzeitig kalter Wärmeträger 10 abgezogen und somit der Druckspeicher 2, 3 mit thermischer Energie (Wärme) beladen. Im Gegensatz zur direkten Beladung des Druckspeichers 2, 3 wird bei einer indirekten Beladung der Wärmeübergang durch einen indirekten thermischen Kontakt des Wärmeträgers 10 mit einer Wärmequelle geschaffen. Beispielsweise können hierfür zusätzliche Einbauten, insbesondere Wärmeüberträger und/oder Wärmeübertragungsflächen im Druckspeicher 2, 3 vorgesehen sein. Weiterhin können für das Beladen des Druckspeichers 2, 3 und/oder des Entladens Beladetassen, Prallplatten und Verteilerrohre als Einbauten in den Druckspeichern 2, 3 vorgesehen sein.

## Patentansprüche

1. Verfahren zum Entladen eines thermischen Schichtspeichers (2, 3), bei dem ein erster thermischer Schichtspeicher (2) in einem ersten Teilbereich (8) eine erste und in einem zweiten Teilbereich (9) eine in Bezug auf die erste Temperatur höhere zweite Temperatur aufweist, wobei der zweite Teilbereich (9) geodätisch oberhalb des ersten Teilbereiches (8) angeordnet ist, bei dem ein Arbeitsfluid (41) eines Organischen-Rankine-Zyklus (36) im flüssigen Aggregatzustand in einen flüssigen Wärmeträger (10) des ersten thermischen Schichtspeichers (2) in den ersten Teilbereich (8, 9) eingeleitet und in direkten stofflichen Kontakt mit dem Wärmeträger (10) gebracht wird, wobei die Dichte des Arbeitsfluides (41) geringer als die Dichte des Wärmeträgers (10) ist, und
wobei im zweiten Teilbereich (9) bei der zweiten Temperatur der Druck im ersten thermischen Schichtspeicher (2) gleich dem Dampfdruck des Arbeitsfluides (41) ist.

2. Verfahren gemäß Anspruch 1, bei dem im ersten thermischen Schichtspeicher (2) verdampftes Arbeitsfluid in den Organischen-Rankine-Zyklus (36) zurückgeführt wird.

3. Verfahren gemäß Anspruch 1 oder 2, bei dem ein Arbeitsfluid (41) verwendet wird, dessen Dichte vor der Verdampfung im thermischen Schichtspeicher (2) stets kleiner oder gleich der Dichte des Wärmeträgers (10) ist.

4. Verfahren gemäß einem der vorangegangen Ansprüche, bei dem der Dampfdruck des Arbeitsfluides (41) bei einer zweiten Temperatur von 130 °C geringer als 1 MPa ist.

5. Verfahren gemäß einem der vorangegangen Ansprüche, bei dem ein Arbeitsfluid (41) verwendet wird, das wenigstens einen der Stoffe 1,1,1,2,2,4,5,5,5-Nonafluoro-4-(Trifluoromethyl)-3-Pentanone, Perfluormethylbutanon, 1-Chloro-3,3,3-trifluoro-1-propene, Cis-1,1,1,4,4,4-hexafluoro-2-butene und/oder Cyclopentan umfasst.

6. Verfahren gemäß einem der vorangegangen Ansprüche, bei dem Wasser (10) als flüssiger Wärmeträger (10) verwendet wird.

7. Verfahren gemäß einem der vorangegangen Ansprüche, bei dem ein Arbeitsfluid (41) verwendet wird, das im flüssigen Aggregatzustand mit dem Wärmeträger (10) nicht mischbar ist.

8. Verfahren gemäß einem der vorangegangen Ansprüche, bei dem ein geregelter Druckspeicher (2) als Schichtspeicher (2) verwendet wird.

9. Verfahren gemäß einem der vorangegangen Ansprüche, bei dem das flüssige Arbeitsfluid (41) mittels einer Verteileinrichtung (12) in den Wärmeträger (10) eingeleitet wird, wobei die Verteileinrichtung (12) das Arbeitsfluid (41) in einer Schicht konstanter erster oder zweiter Temperatur des Wärmeträgers (10) homogen verteilt.

10. Verfahren gemäß einem der vorangegangen Ansprüche, bei dem sich im Wärmeträger (10) angesammeltes Arbeitsfluid (41, 42) in den Organischen-Rankine-Zyklus (36) zurückgeführt wird.

11. Verfahren gemäß einem der vorangegangen Ansprüche, bei dem ein Phasenwechselmaterial im thermischen Schichtspeicher (2) zur Speicherung thermischer Energie verwendet wird.

12. Verfahren gemäß einem der vorangegangen Ansprüche, bei dem ein zweiter thermischer Schichtspeicher (3), welcher zweite thermischer Schichtspeicher (3) mit dem ersten thermischen Schichtspeicher (2) fluidisch über den Wärmeträger (10) gekoppelt ist, verwendet wird, wobei dem ersten thermischen Schichtspeicher (2) im zweiten Teilbereich (9) Wärmeträger (10) des zweiten thermischen Schichtspeichers (3) mit einer zweiten Temperatur zugeführt wird und im ersten Teilbereich (8) des ersten thermischen Schichtspeichers (2) Wärmeträger (10) des ersten thermischen Schichtspeichers (2) mit einer ersten Temperatur zum zweiten thermischen Schichtspeichers (3) zurückgeführt wird.

13. Vorrichtung zum Entladen eines thermischen Schichtspeichers (2, 3), umfassend eine Anlage (6), die zur Durchführung eines Organischen-Rankine-Zyklus (36) ausgebildet ist und einen ersten thermischen Schichtspeicher (2), der in einem ersten Teilbereich (9) eine erste Temperatur und in einem zweiten Teilbereich (8) eine in Bezug auf die erste Temperatur höhere zweite Temperatur aufweist, wobei der zweite Teilbereich (9) geodätisch oberhalb des ersten Teilbereiches (8) angeordnet ist, wobei der erste thermische Schichtspeicher (2) und die Anlage (6) derart ausgestaltet und gekoppelt sind, dass ein Arbeitsfluid (41) eines Organischen-Rankine-Zyklus (36) im flüssigen Aggregatzustand in einen flüssigen Wärmeträger (10) des ersten thermischen Schichtspeichers (2) in den ersten Teilbereich (8, 9) eingeleitet und in direkten stofflichen Kontakt mit dem Wärmeträger (10) gebracht wird, wobei die Dichte des Arbeitsfluides (41) geringer als die Dichte des Wärmeträgers (10) ist, und
wobei im zweiten Teilbereich (9) bei der zweiten Temperatur der Druck im ersten thermischen Schichtspeicher (2) gleich dem Dampfdruck des Arbeitsfluides (41) ist.

14. Vorrichtung gemäß Anspruch 13, **dadurch gekennzeichnet, dass** der erste thermische Schichtspeicher (2) eine Verteileinrichtung (12) umfasst, die zu einer homogenen Verteilung des flüssigen Arbeitsfluides (41) in einer Schicht konstanter erster oder zweiter Temperatur des Wärmeträgers (10) ausgebildet ist.

15. Vorrichtung gemäß Anspruch 13 oder 14, mit einem zweiten Schichtspeicher (3), wobei der erste und der zweite thermische Schichtspeicher (2, 3) derart ausgestaltet und fluidisch über den Wärmeträger (10) gekoppelt sind, dass dem ersten thermischen Schichtspeicher (2) im zweiten Teilbereich (9) Wärmeträger (10) des zweiten thermischen Schichtspeichers (3) mit einer zweiten Temperatur zugeführt wird und im ersten Teilbereich (8) des ersten thermischen Schichtspeichers (2) Wärmeträger (10) des ersten thermischen Schichtspeichers (2) mit einer ersten Temperatur zum zweiten thermischen Schichtspeichers (3) zurückgeführt wird.

## Claims

1. Method for discharging a stratified thermal storage tank (2, 3), in which a first stratified thermal storage tank (2) has a first temperature in a first sub-region (8) and has a second temperature, higher in relation to the first temperature, in a second sub-region (9), wherein the second sub-region (9) is arranged geodetically above the first sub-region (8), in which a working fluid (41) of an organic Rankine cycle (36) in the liquid state of aggregation is introduced into a fluid heat transfer medium (10) of the first stratified thermal storage tank (2), into the first sub-region (8, 9), and brought into direct material contact with the heat transfer medium (10), wherein the density of the working fluid (41) is lower than the density of the heat transfer medium (10), and wherein, in the second sub-region (9) at the second temperature, the pressure in the first stratified thermal storage tank (2) is equal to the vapor pressure of the working fluid (41).

2. Method according to Claim 1, in which working fluid vaporized in the first stratified thermal storage tank (2) is returned to the organic Rankine cycle (36).

3. Method according to Claim 1 or 2, in which a working fluid (41) is used whose density prior to the vaporization in the stratified thermal storage tank (2) is always less than or equal to the density of the heat transfer medium (10).

4. Method according to any one of the preceding claims, in which the vapor pressure of the working fluid (41) is less than 1 MPa at a second temperature of 130°C.

5. Method according to any one of the preceding claims, in which a working fluid (41) is used that comprises at least one of the substances 1,1,1,2,2,4,5,5,5-nonafluoro-4-(trifluoromethyl)-3-pentanone, perfluoromethylbutanone, 1-chloro-3,3,3-trifluoro-1-propene, cis-1,1,1,4,4,4-hexafluoro-2-butene and/or cyclopentane.

6. Method according to any one of the preceding claims, in which water (10) is used as a fluid heat transfer medium

7. Method according to any one of the preceding claims, in which a working fluid (41) is used that, in the liquid state of aggregation, is not miscible with the heat transfer medium (10).

8. Method according to any one of the preceding claims, in which a controlled pressurized storage tank (2) is used as a stratified thermal storage tank (2).

9. Method according to any one of the preceding claims, in which the liquid working fluid (41) is introduced into the heat transfer medium (10) by means of a distributing device (12), wherein the distributing device (12) distributes the working fluid (41) homogeneously in a layer of constant first or second temperature of the heat transfer medium (10).

10. Method according to any one of the preceding claims, in which working fluid (41, 42) accumulated in the heat transfer medium (10) is returned to the organic Rankine cycle (36).

11. Method according to any one of the preceding claims, in which a phase-change material is used in the stratified thermal storage tank (2) for storing thermal energy.

12. Method according to any one of the preceding claims, in which a second stratified thermal storage tank (3) is used, which second stratified thermal storage tank (3) is fluidically coupled to the first stratified thermal storage tank (2) via the heat transfer medium (10), wherein heat transfer medium (10) of the second stratified thermal storage tank (3), having a second temperature, is supplied to the first stratified thermal storage tank (2), in the second sub-region (9), and in the first sub-region (8) of the first stratified thermal storage tank (2) heat transfer medium (10) of the first stratified thermal storage tank (2), having a first temperature, is returned to the second stratified thermal storage tank (3).

13. Device for discharging a stratified thermal storage tank (2, 3), comprising a system (6) designed to execute an organic Rankine cycle (36), and a first stratified thermal storage tank (2), which has a first temperature in a first sub-region (8) and has a second temperature, higher in relation to the first temperature, in a second sub-region (9), wherein the second sub-region (9) is arranged geodetically above the first sub-region (8), wherein the first stratified thermal storage tank (2) and the system (6) are designed and coupled in such a manner that a working fluid (41) of an organic Rankine cycle (36) in the liquid state of aggregation is introduced into a fluid heat transfer medium (10) of the first stratified thermal storage tank (2), into the first sub-region (8, 9), and brought into direct material contact with the heat transfer medium (10), wherein the density of the working fluid (41) is lower than the density of the heat transfer medium (10), and wherein, in the second sub-region (9) at the second temperature, the pressure in the first stratified thermal storage tank (2) is equal to the vapor pressure of the working fluid (41).

14. Device according to Claim 13, **characterized in that** the first stratified thermal storage tank (2) comprises a distributing device (12), which is designed to distribute the liquid working fluid (41) homogeneously in a layer of constant first or second temperature of the heat transfer medium (10).

15. Device according to Claim 13 or 14, having a second stratified storage tank (3), wherein the first and the second stratified thermal storage tank (2, 3) are designed and fluidically coupled via the heat transfer medium (10), in such a manner that heat transfer medium (10) of the second stratified thermal storage tank (3), having a second temperature, is supplied to the first stratified thermal storage tank (2), in the second sub-region (9), and in the first sub-region (8) of the first stratified thermal storage tank (2) heat transfer medium (10) of the first stratified thermal storage tank (2), having a first temperature, is returned to the second stratified thermal storage tank (3).

## Revendications

1. Procédé de décharge d'un accumulateur (2, 3) en couches thermique, dans lequel un premier accumulateur (2) en couches thermique a, dans une première sous-partie (8), une première température et dans une deuxième sous-partie (9), une deuxième température plus haute que la première température, la deuxième sous-partie (9) étant disposée géodésiquement au dessus de la première sous-partie (8), dans lequel on introduit, dans la première sous-partie (8, 9) un fluide (41) de travail d'un cycle (36) de Rankine-organique à l'état liquide, dans un agent (10) caloporteur liquide du premier accumulateur (2) en couches thermique et on le met en contact de matière directe avec l'agent (10) caloporteur, la masse volumique du fluide (41) de travail étant plus petite que la masse volumique de l'agent (10) caloporteur et
dans lequel, dans la deuxième sous-partie (9) à la deuxième température, la pression, dans le premier accumulateur (2) en couches thermique, est égale à la tension de vapeur du fluide (41) de travail.

2. Procédé suivant la revendication 1, dans lequel on recycle, dans le cycle (36) organique-Rankine, du fluide de travail évaporé dans le premier accumulateur (2) en couches thermique.

3. Procédé suivant la revendication 1 ou 2, dans lequel on utilise un fluide (41) de travail dont la masse volumique, avant l'évaporation dans l'accumulateur (2) en couches thermique, est toujours inférieure ou égale à la masse volumique de l'agent (10) caloporteur.

4. Procédé suivant l'une des revendications précédentes, dans lequel la tension de vapeur du fluide (41) de travail est, pour une deuxième température de 130°C, plus petite que 1 MPa.

5. Procédé suivant l'une des revendications précédentes, dans lequel on utilise un fluide (41) de travail, qui comprend au moins l'une des substances 1,1,1,2,2,4,5,5,5-nonafluoro-4-(trifluorométhyl)-3-pentanone, perfluorméthylbutanone, 1-choro-3,3,3-trifluoro-1-propène, Cis-1,1,1,4,4,4-hexafluoro-2-butène et/ou cyclopentane.

6. Procédé suivant l'une des revendications précédentes, dans lequel on utilise de l'eau comme agent (10) caloporteur liquide.

7. Procédé suivant l'une des revendications précédentes, dans lequel on utilise un fluide (41) de travail, qui, à l'état liquide, n'est pas miscible à l'agent (10) caloporteur.

8. Procédé suivant l'une des revendications précédentes, dans lequel on utilise un accumulateur (2) de pression régulée comme accumulateur (2) en couches.

9. Procédé suivant l'une des revendications précédentes, dans lequel on introduit le fluide (41) de travail liquide dans l'agent (10) caloporteur, au moyen d'un dispositif (12) de répartition, le dispositif (12) de répartition répartissant de manière homogène le fluide (41) de travail, dans une couche de première ou deuxième température constante de l'agent (10) caloporteur.

10. Procédé suivant l'une des revendications précédentes, dans lequel on recycle, dans le cycle (36) organique-Rankine, du fluide (41, 42) de travail accumulé dans l'agent (10) caloporteur.

11. Procédé suivant l'une des revendications précédentes, dans lequel on utilise une matière à changement de phase dans l'accumulateur (2) en couches thermique, pour accumuler de l'énergie thermique.

12. Procédé suivant l'une des revendications précédentes, dans lequel on utilise un deuxième accumulateur (3) en couches thermique, qui est couplé fluidiquement par l'intermédiaire de l'agent (10) caloporteur, avec le premier accumulateur (2) en couches thermique, dans lequel on envoie, au premier accumulateur (2) en couches thermique, dans la deuxième sous-partie (9) de l'agent (10) caloporteur du deuxième accumulateur (3) en couches thermique ayant une deuxième température et on recycle, au deuxième accumulateur (3) en couches thermique, dans la première sous-partie (8) du premier accumulateur (2) en couches thermique, de l'agent (10) caloporteur du premier accumulateur (2) en couches thermique ayant une première température.

13. Dispositif de décharge d'un accumulateur (2, 3) en couches thermique, comprenant une installation (6), qui est constituée pour effectuer un cycle (36) organique-Rankine et un premier accumulateur (2) en couches thermique, qui a, dans une première sous-partie (9), une première température et dans une première sous-partie (8), une deuxième température plus haute que la première température, dans lequel la deuxième sous-partie (9) est disposée géodésiquement au dessus de la première sous-partie (8), dans lequel le premier accumulateur (2) en couches thermique et l'installation (6) sont conformés et couplés de manière à ce qu'un fluide (41) de travail d'un cycle (36) organique-Rankine soit, à l'état liquide, introduit dans un agent (10) caloporteur liquide du premier accumulateur (2) en couches thermique, dans la première sous-partie (8, 9) et soit mis en contact de matière directe avec l'agent (10) caloporteur, la masse volumique du fluide (41) de travail étant plus petite que la masse volumique de l'agent (10) caloporteur et dans lequel, dans la deuxième sous-partie (9), à la deuxième température, la pression, dans le premier accumulateur (2) en couches thermique, est égale à la tension de vapeur du fluide (41) de travail.

14. Dispositif suivant la revendication 13, **caractérisé en ce que** le premier accumulateur (2) en couches thermique comprend un dispositif (12) de répartition constitué pour obtenir une répartition homogène du fluide (41) de travail liquide dans une couche de première ou deuxième température constante de l'agent (10) caloporteur.

15. Dispositif suivant la revendication 13 ou 14, comprenant un deuxième accumulateur (3) en couches, le premier et le deuxième accumulateur (2, 3) en couches thermique étant conformés et couplés fluidiquement par l'intermédiaire de l'agent (10) caloporteur, de manière à envoyer au premier accumulateur (2) en couches thermique, dans la deuxième sous-partie (9) de l'agent (10) caloporteur du deuxième accumulateur (3) en couches thermique ayant une deuxième température et à recycler, vers le deuxième accumulateur (3) en couches thermique, dans la première sous-partie (8) du premier accumulateur (2) en couches thermique de l'agent (10) caloporteur du premier accumulateur (2) en couches thermique ayant une première température.
